# NEUE EUROPÄISCHE PATENTSCHRIFT

(11) **EP 0 937 004 B2**
(45) Veröffentlichungstag und Bekanntmachung des Hinweises auf die Entscheidung über den Einspruch: **11.10.2006**
(45) Hinweis auf die Patenterteilung: 26.04.2000
(21) Anmeldenummer: 97946750.3
(22) Anmeldetag: 21.10.1997
(51) Int. Cl.: B65G 53/24, B65G 53/28, B65G 53/60

(54) **VORRICHTUNG UND VERFAHREN ZUM PNEUMATISCHEN FÖRDERN PULVERFÖRMIGER STOFFE**
PROCESS AND DEVICE FOR PNEUMATICALLY CONVEYING POWDERY SUBSTANCES
PROCEDE ET DISPOSITIF PNEUMATIQUE DE TRANSPORT DE MATIERES PULVERULENTES

(30) Priorität: 22.10.1996 DE 19643523; 28.12.1996 DE 19654649
(43) Veröffentlichungstag der Anmeldung: 25.08.1999
(73) Patentinhaber: Dietrich Engineering Consultants S.A., 1024 Ecublens (VD) (CH)
(72) Erfinder: Dietrich, Frédéric, 1801 Le Mont Pelerin/VD (CH)
(74) Vertreter: Hiebsch, Gerhard F.
(86) Internationale Anmeldenummer: PCT/EP1997/005802
(87) Internationale Veröffentlichungsnummer: WO 1998/017558

(56) Entgegenhaltungen:
- EP-A- 0 538 711
- EP-A- 0 574 596
- EP-B- 0 526 806
- EP-B- 0 526 808
- DE-A- 2 363 721
- DE-A- 2 437 799
- DE-U- 6 946 889
- FR-A- 2 492 347
- US-A- 4 005 908

## Beschreibung

Die Erfindung betrifft eine Vorrichtung zum pneumatischen Fördern pulverförmiger Stoffe nach dem Oberbegriff des Patentanspruches 1 sowie ein mit dieser durchführbares Verfahren.
Die FR-A-2 492 347 offenbart eine Anlage mit einem an eine Zuführleitung angeschlossenen Behälter, in den ein Kopfgefäß integriert ist, welches von einem plattenartigen Trennfilter durchspannt wird. Dieser begrenzt einen -- darüber liegenden -- Kopfraum, an den eine Förderleitung anschließt, die sowohl dem Austrag als auch der Zuführung aus bzw. zu dem Kopfraum dient. Das Kopfgefäß des Behälters verjüngt sich abwärts zu einer Art von Hals, welcher durch eine Sperrklappe verschlossen zu werden vermag.
Unterhalb dieses Halses finden sich im Behälter eine Niveaukontrolle sowie ein Lufteinlass, welch letzterer andernends an ein Gebläse bzw. einen Verdichter anschließt.
Der Verdichter bzw. das Gebläse ist anderseitig mit einer Leitung an einen Luftfilter angeschlossen. In diese Leitung mündet jene Förderleitung, die andernends -- wie gesagt -- an den Kopfraum des Behälters anschließt. Die Querschnitte der Leitungen sind durch Ventile verschließbar, die an eine Steuerung angeschlossen sind. Zudem mündet in die Förderleitung eine Druckleitung, die von der Druckseite des Gebläses ausgeht.

Aus der EP 0 538 711 A geht eine Fördervorrichtung etwa für Kunststoffgranulate mit einer Schlauchleitung hervor, die einends mittels einer Lanze in einen Speichersilo eintaucht sowie andernends durch einen Filterträger hindurch in einen Rohrstutzen einragt, der auf dem kastenartigen Einlaß einer tangentialen Einzugsöffnung eines Plastifizierzylinders sitzt. Über dem Filterträger ist eine ebenfalls von der Schlauchleitung durchsetzte Deckel-Baugruppe mit einer Saugkammer vorgesehen. Letzere weist zum Rohrstutzen gerichtete Saugöffnungen auf und steht mit einem Düsensystem in Wirkverbindung, dem Druckluft oder Druckgas als Arbeitsmedium zugeführt werden kann. In der Saugkammer wird ein relativ hoher Unterdruck erzeugt, der sich durch die Saugöffnungen und die Filter in den Rohrstutzen sowie von dort aus durch die Schlauchleitung bis in den Speichersilo fortpflanzt. Jenes Arbeitsmedium soll durch Erhöhung seiner Geschwindigkeit im Fördergut einen so hohen Druck erzeugen, dass die Feststoffe unter Vermischung mit einem Saugluftstrom zu jenem kastenartigen Einlass gesaugt werden. An den Filtern werden die Feststoffe vom Saugluftstrom abgetrennt und dieser mit dem Arbeitsmedium gemischt. Eine Filterreinigung kann während des Prozesses nicht durchgeführt werden.

Die EP A 574 596 beschreibt eine Anlage für das pneumatische Umschlagen von Zement aus Schiffen in Silos mittels eines sog. Schleusenbehälters aus mehreren Behältersegmenten; im obersten Behältersegment sitzt ein Abluftfilter, das unterste Behältersegment verjüngt sich trichterartig.

Auch in der chemischen, pharmazeutischen und der Lebensmittelindustrie werden pulverförmige Stoffe gefördert und in einer kontrollierten Atmosphäre transportiert. Die bekannten Anlagen zum Fördern pulverförmiger Werkstoffe dieser Art sind zumeist in der Konstruktion auf das nachträglich zu fördernde Produkt abgestimmt; bei diesen Anlagen handelt es sich um Einzelanfertigungen, die hohe Anlagekosten bedingen. Als weiterer Nachteil ist bei den bekannten Anlagen u.a. anzusehen, daß die erforderlichen Filter bereits nach einer kurzen Betriebszeit verstopfen. Infolge dieses Problems treten in der Produktion der pulverförmigen Stoffe oftmals Störungen auf, die zu kostenträchtigen Produktionsausfällen führen. Diese Mängel konnten bis zum heutigen Tage nicht behoben werden.

Das Einfüllen von Pulver in Reaktionsgefäße oder Reaktoren innerhalb explosiver Zonen erfolgt im allgemeinen manuell über eine Schleuse oder ein Schutzventil, da die meisten Reaktoren nicht über den nötigen Platz für eine adäquate Ladeanlage verfügen. Eine solche Arbeitsweise aber entspricht nicht den vorhandenen Sicherheitsregein zur Unterbindung der Explosionsgefahr; wenn der Reaktor inertisiert ist, führt das manuelle Einfüllen von Pulvern vom Mannloch zu atmosphärischen Drücken und hebt den Schutzeffekt des Inertgases auf. Bei manuellem Feststoffeintrag ist die Inertisierung innerhalb kurzer Zeit aufgehoben (02 Konzentration > 8 %) und wird auch nach längerer betriebsmäßiger N2-Spülung nicht wieder hergestellt.

Zudem kann der Staub zu einer Verschmutzung der Umgebung führen; durch die sich entwickelnden Gasdämpfe besteht Erstickungsgefahr für das Bedienungspersonal. Explosionsrisiken während des Förderns sind vor allem dann möglich, wenn die folgenden Faktoren simultan aufeinandertreffen:
- oxydierbares Pulver;
- Verhältnis Pulver/Sauerstoff liegt innerhalb eines Explosionslimits (variiert je nach Produkt);
- Bildung einer Ignitionsquelle (elektrostatische Entladung, Flamme, heißer Punkt, Funken).

In Kenntnis dieser Gegebenheiten hat sich der Erfinder das Ziel gesetzt, die erkannten Nachteile zu beseitigen und ein kostengünstiges Fördern pulverförmiger Stoffe, auch klebriger Stoffe, zu ermöglichen. Insbesondere sollen pulverförmige Feststoffe in Reaktoren od.dgl. Aggregate mit erhöhter Sicherheit eingefüllt werden können.

Zur Lösung dieser Aufgabe führt die Lehre nach den unabhängigen Patentansprüchen; die Unteransprüche geben günstige Weiterbildungen an.

Erfindungsgemäß ist bei der erwähnten Vorrichtung zum pneumatischen Fördern pulverförmiger Stoffe eines spezifischen Gewichtes von 0,1 bis 15,0 g/cm³ sowie mit einem Korngrößenbereich zwischen 0,1 bis 300 µm als Fördergut das Verhältnis der Länge des eine Pumpkammer bildenden Behälters zur zeitweiligen Aufnahme des Fördergutes zu seinem inneren Durchmesser zwischen 2,0 und 8,0 liegt nach Patentanspruch 1.

Zudem hat es sich zur Handhabung des Filters als günstig erwiesen, dieses als plattenartige Filtermembrane auszugestalten, die bevorzugt auswechselbar in einem Rahmen eines Filtereinsatzes untergebracht ist.

Dem erfindungsgemäßen Behälter sind vier miteinander steuerbare automatische Sperrelemente zugeordnet, nämlich jeweils eines an der Zuführleitung und der Austragsleitung sowie an den Leitungen für Vakuum und Fördermedium.

Während einer Ansaugphase öffnet sich das Sperrelement der Zuführleitung, wohingegen die Austragsleitung geschlossen bleibt. Dank des dabei offenen Vakuumanschlusses wird Fördergut in die Pumpkammer gesaugt; nach einer vorausbestimmten Zeitspanne schließt die Zuführleitung und der Austrag wird freigegeben. Das Fördergut wird durch Druck -- Druckluft oder Stickstoff zur Filterreinigung -- ausgestoßen. Das Filter im oberen Teil des Behälters hält die feinsten Partikel zurück und reinigt sich bei jedem Entleerungsryklus.

Vor der Einführung des Pulvers in den nachgeordnetetn Reaktor -- beispielsweise ein Mischer, eine Mühle od.dgl. Aggregat, in welchem eine Reaktion erfolgt -- werden Luft und Pulver voneinander getrennt, indem das Schließen des Vakuum-Absperrventils gegenüber dem Öffnen des Förderguteinlaufes verzögert wird. Damit beim Öffnen der Austragsleitung keine Gase des Reaktors angesaugt werden, wird der Behälter zuerst unter Druck gesetzt und erst dann das Entleerventil geöffnet. Im übrigen kann die Vakuumleitung nur bei geschlossener Austragsleitung geöffnet werden.

Als günstig erwiesen hat sich ein Verhältnis von Behälterlänge zu Behälterdurchmesser im Bereich zwischen zwischen 2,0 und 8,0. Die Behälterweite bzw. der Behälterdurchmesser selbst liegt vorteilhafterweise zwischen 10 und 500 mm, insbesondere 50 und 400 mm, die Behälterlänge zwischen 200 und 1000 mm, insbesondere zwischen 400 und 900 mm. Es handelt sich also um einen vergleichsweise engen Behälter, wobei bevorzugt der Durchmesser des Behälters die Filtergröße bestimmt.

Im Rahmen der Erfindung liegt es, die Vorrichtung mit einem Druck zum Ansaugen des Fördergutes zwischen 1 und 25 mbar -- vor allem 5,0 bis 20 mbar -- zu fahren. Der Überdruck zum Austragen des Fördergutes soll dazu zwischen 0,5 und 5,0 bar -- insbesondere 1,0 und 3,0 bar -- betragen.

Nach einem weiteren Merkmal der Erfindung soll das Filter derart ausgelegt werden, daß an seiner der Vakuumpumpe abgewandten Seite ein Differenzdruck zwischen 100 bis 300 mbar entsteht.

Vorteilhaft ist zudem ein flaches Gitter, das vakuumseitig dem Filter als Stützeinrichtung zugeordnet wird. Dessen bevorzugte Maschenweite soll zwischen 5 und 50 mm, vorzugsweise zwischen 10 und 40 mm, liegen. Auch an der anderen Filteroberfläche kann ein Gitter vorgesehen sein.

Außerdem kann jenes Gitter an einen Vibrationsantrieb angeschlossen und so als Vibrationsquelle für das Filter ausgebildet sein.

Reinigungshalber wird dem Filter erfindungsgemäß während des Entleerens eine Gegenstromspülung zugeordnet, die in Zeitintervallen steuerbar ist; ein solcher Luftstrahl kann an beiden Filteroberflächen vorgesehen werden.

Im Unterschied zu den bisherigen Vorrichtungen und Anlagen sind bei Beachtung der erfindungsgemäßen Vorgaben geringere Abmessungen möglich, so daß kostenträchtige Raumprobleme entfallen.

Von besonderer Bedeutung ist die Möglichkeit, zur Erhöhung des Durchsatzes mehrere dieser Vorrichtungen ohne Schwierigkeiten gemeinsam -- beispielsweise als Tandemanlage -- einzusetzen. So werden etwa mehrere der Vorrichtungen nebeneinander im gleichen Rhythmus oder im wechselnden Rhythmus gefahren.

Jedoch liegt es auch im Rahmen der Erfindung, zum Abändern des Mischungsverhältnisses der pulverförmigen Stoffe wenigstens zwei Vorrichtungen nebeneinander mit unterschiedlichen Rhythmen zu fahren.

Bevorzugt wird zum Austragen der pulverförmigen Stoffe durch pneumatisches Fördern gereinigte Druckluft eingesetzt, ein reaktives Gas oder ein inertes Gas, insbesondere Stickstoff.

Das beschriebene System ermöglicht das Fördern von pulverförmigen Produkten über eine flache Filtermembrane, die im oberen Teil einer Pumpkammer installiert ist; deren Durchmesser entsprich i.w. jenem der Filtermembrane.

Es werden Pulverprodukte gefördert:, indem abwechslungsweise eine Vakuum- und Druckquelle an die Pumpkammer angelegt werden. Das durch eine Vakuumpumpe erzeugte Vakuum saugt das pulverartige Fördergut in die Pumpkammer, das Filter trennt durch die Vakuumpumpe angesaugte Partikel von der Luft. Der Druck des Fördergases ermöglicht, die Pumpkammer zu entleeren und gleichzeitig das Filter durch einen Gegen strom zu reinigen.

Dank dieser Maßgaben können die meisten Probleme im Zusammenhang mit Transport und Dosierung von feinen, klebrigen, kontaminierten Pulvern gelöst werden

Als besondere Vorteile sind die folgenden Eigenschaften anzusehen:
- ein mobiles und kompaktes System;
- eine einfache Kunstruktion mit zylindrischer Kammer, für viele Werkstoffe (SS, Hastelloy Marke der UCC für Ni-Legierungen mit Zuschlägen von z.B. Mo, Cr, Mg, Ca, Si, Fe, Kunststoff, Glas);
- ein sehr einfaches Reinigen;
- eine wirtschaftliche Installation;
- kein Zerstören des Pulvers während des Förderns;
- kein Anhaften klebriger Pulver mit schlechten Fließeigenschaften;
- ein völlig abgedichtetes System; keine Staubbildung;
- keine Sauerstoffzufuhr in geschlossenen Behälter möglich.

Zudem vermindert das System beträchtlich die Explosionsgefahr während des Einführens von Pulvern in Reaktoren oder ähnliche Gefäße, die brennbare Gase/Dämpfe enthalten. Da das Pulverfördern durch Ansaugen eizielt wird, vermindert sich das Explosionsrisiko in der Förderleitung beträchtlich. Das Verhältnis Pulver/Sauerstoff befindet sich in den meisten Fällen außerhalb des Explosionslimits. Da keine drehbaren Teile vorhanden sind, scheidet auch jede Art von Zündung, Explosionsgefahr durch Reibung aus.

Diese Technik ermöglicht es, Pulveraus Säcken, Big-Bags oder Silos in einen unter Druck stehenden Behälter abzufüllen und entspricht somit völlig den Erwartungen in Bezug auf die Sicherheitsvorkehrungen in der chemischen sowie pharmazeutischen Industrie. Es entsteht die Möglichkeit, verschiedene Gase für die Entleerung der Pumpkammer zu benützen, z.B. Stickstoff, Argon. Der Einsatz eines Neutralgases für die Entleerung erlaubt es beispielsweise, inertisierte Reaktoren mit Pulver zu füllen ohne Sauerstoff in den Reaktor einzugeben. Der Verbrauch an Inertgas ist dadurch gering, da es während der Ansaugphase nicht für das Pulverfördern benützt wird, sondern nur für das Entleeren der Pumpkammer. In der Pumpkammer wird der Sauerstoff vom Pulver getrennt und durch Inertgas ersetzt.

Bei auf dem Markt befindlichen Systemen sind große Filtriermanschetten erforderlich, um ein zu schnelles Kleben der Filter zu verhindern; eine Reinigung eines Manschettenfilters ist schwierig und nicht sehr effizient. Hingegen ist die Reinigung eines flachen Filters einfacher. Die erfindungsgemäß zyklische Reinigung des Filters in häufigen Intervallen ermöglicht es, eine konstante Filtrationseffizienz zu garantieren.

Das Volumen der Kammer bisher üblicher Systeme ist wegen des großen Volumens des Filters groß. Die Entleerung dieser Anlagen wird auf gravimetrische Weise durchgeführt. Ein Reduzierstück ist normalerweise nötig, um eine Verbindung der Anlage an einen Flansch mit Standard-Größe zu ermöglichen. Die Reduktion löst des öfteren Ablaufprobleme aus und bedingt die Benützung eines Vibrators od.dgl. Hilfsgerätes, um das Pulver vom Abscheider auszutragen.

Der Einsatz der beschriebenen Vorrichtung bzw. des Verfahrens erfolgt bevorzugt für das Beaufschlagen eines Reaktionsgefäßes in der chemischen Industrie oder der Lebensmittel-Industrie, in der pharmazeutischen Industrie oder der Farben und Lacke erzeugenden Industrie.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt jeweils in schematischer Darstellung in
- Fig. 1:: eine Vorrichtung zum pneumatischen Fördern pulverförmiger Stoffe in Seitenansicht;
- Fig. 2:: ein vergrößertes Detail aus Fig. 1;
- Fig. 3:: eine Seitenansicht eines Spannverschlusses der Vorrichtung;
- Fig. 4:: eine Draufsicht auf die Vorrichtung;
- Fig. 5:: die Vorrichtung in einer angedeuteten Anlage;
- Fig. 6:: ein Zwillingsaggregat in Seitenansicht;
- Fig. 7:: die Draufsicht auf die Vorrichtung der Fig. 4;
- Fig. 8:: eine Teilschrägsicht auf einen Filtereinsatz.

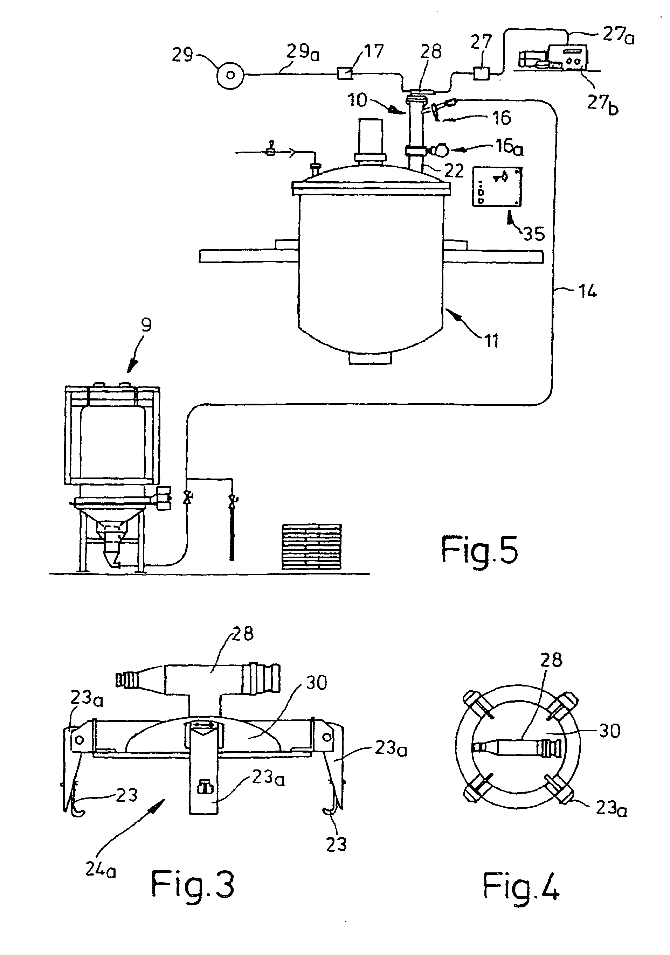

Eine Vorrichtung 10 zum pneumatischen Fördern von pulverförmigen Stoffen des spezifischen Gewichtes von 0,1 bis 15,0 g/cm³ in einem Korngrößenbereich zwischen 0,1 und 300 µm aus einem in Fig. 5 angedeuteten Silo 9 zu einem Reaktionsgefäß oder Reaktor 11 weist einen zylindrischen Behälter 12 -- aus elektrolytisch poliertem Edelstahl -- einer Länge a von hier 600 oder 850 mm auf, dessen Innenraum eines inneren Durchmessers d von 200 bzw 300 mm als Pumpkammer 13 dient, sowie einen Ansatzstutzen 14ₐ für eine Zuführleitung 14 zum Ansaugen des Fördergutes. Die Zuführleitung 14 enthält ein sog. Schmetterlingsventil 16 als Sperrorgan in einem Anschlußflansch 15.

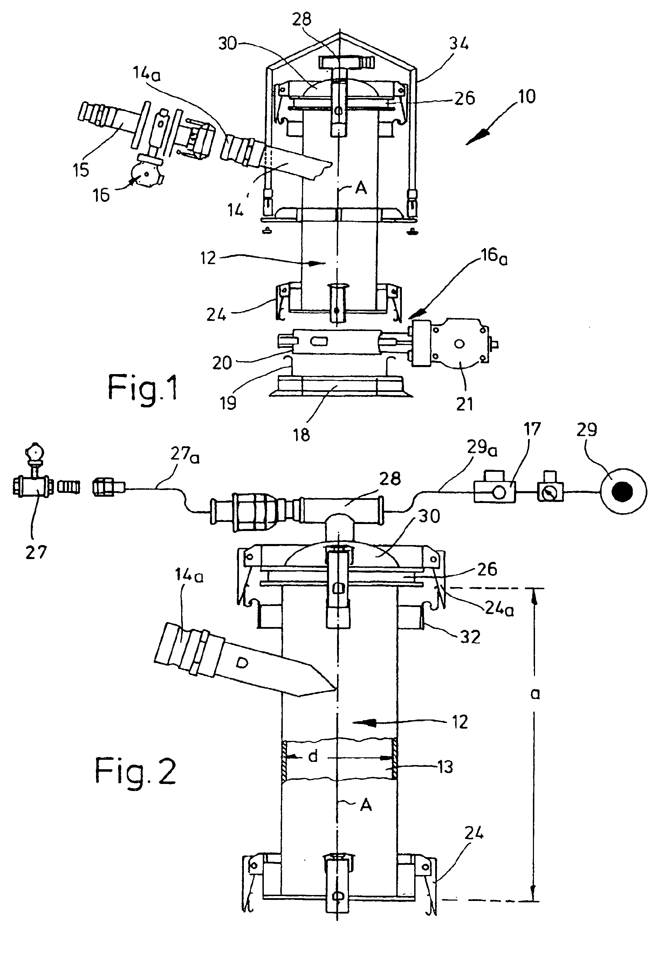

Über dem in Fig. 1 aus Gründen der Übersichtlichkeit in Abstand zum Behälter 12 skizzierten Behälterboden 18 sind ein Ventilgehäuse 20 und ein Antriebselement 21 für ein Schmetterlingsventil 16ₐ einer Austragsleitung 22 angedeutet. Diese ist ebenso der Fig. 5 zu entnehmen wie der von ihr beaufschlagbare, unter Druck stehende Reaktor 11. Parallel zur Behälterachse A gerichtete Hakenglieder 19 des Behälterbodens 18 dienen zu dessen lösbarer Befestigung mittels einer Spannhaken 23 an Zuglaschen 23ₐ aufweisenden Verriegelungseinrichtung 24 des Behälters 12.

Nach oben hin endet der Behälter 12 an einem Filtereinsatz 26, der von einem -- axial mit einem T-förmigen Anschlußrohr 28 versehenen -- Domdeckel 30 überspannt wird. Dieser ist mit einer weiteren Verriegelungseinrichtung 24ₐ an Zughaken 32 des Behälters 12 festgelegt. Dessen oberer Abschnitt wird in Fig. 1 -- zusammen mit der beschriebenen Behälterabdeckung 26, 30 -- von einem Haubengestell 34 umgeben.

Von jenem Anschlußrohr 28 geht in Fig. 2 zum einen eine Vakuumleitung 27ₐ mit Vakuumventil 27 für eine diesem vorgeordnete Vakuumpumpe 27_{b} ab sowie anderseits eine -- ein Sperrventil 17 enthaltende -- Fördergasleitung 29ₐ für eine Fördergasquelle 29.

Während einer Ansaugphase öffnet sich das Schmetterlingsventil 16 der Zuführleitung 14, die Austragsleitung 22 bleibt geschlossen. Nun füllt sich die Pumpkammer 13 dank des Aufbaues eines Vakuums über die Vakuumleitung 27ₐ bis zu einer gewünschten Füllhöhe, gegebenenfalls auch gänzlich.

Nach einer vorbestimmten Zeitspanne wird die Zuführleitung 14 geschlossen und die Austragsleitung 22 geöffnet. Das Pulver wird mittels Druck -- beispielsweise von Stickstoff zur Filterreinigung -- nach dem Öffnen des Sperrventils 17 in der Fördergasleitung 29ₐ ausgestoßen. Am Ende der Ansaugphase bleibt die Vakuumleitung 27ₐ während einer gewissen Zeit offen, bevor das Schmetterlingsventil 16ₐ der Austragsleitung 22 geöffnet wird, um den Sauerstoff aus der Pumpkammer 13 zu entfernen.

Von besonderer Bedeutung ist bei diesem Vorgang das Filter im Filtereinsatz 26, welches das Pulver zurückhält und gleichzeitig die Saugkapazität des Systems bewahrt. Dank seiner Lage zwischen Pumpkammer 13 und Fördergasquelle 29 wird das Filter bei jedem Zyklus gereinigt und behält darum seine volle Filtrationskapazität.

Die vier Sperrelemente 16, 16ₐ, 17, 27 sind miteinander an einem Steuerkasten 35 steuertechnisch verbunden. Während einer Ansaugphase öffnet sich das Schmetterlingsventil 16 der Zuführleitung 14, wohingegen die Austragsleitung 22 geschlossen bleibt. Dank des dabei offenen Vakuumventils 27 saugt sich die Pumpkammer 13 voll; nach einer vorausbestimmten Zeitspanne schließt die Zuführleitung 14 und die Austragsleitung 22 wird freigegeben. Das Fördergut wird durch Druck -- Druckluft oder Stickstoff zur Filterreinigung -- ausgestoßen. Das Filter im oberen Teil des Behälters 12 hält die feinsten Partikel zurück und reinigt sich bei jedem Entleerungszyklus.

Vor der Einführung des Pulvers in den nachgeordneten Reaktor 11 werden Luft und Pulver voneinander getrennt, indem das Schließen des Vakuum-Absperrventils 27 gegenüber dem Öffnen des Förderguteinlaufes 14 verzögert wird. Damit bei Freigabe der Austragsleitung 22 keine Gase des Reaktors 11 angesaugt werden, wird der Behälter 12 zuerst unter Druck gesetzt und erst dann das Entleerungsventil 16ₐ geöffnet.

Im übrigen kann die Vakuumleitung 27ₐ nur bei geschlossener Austragsleitung 22 geöffnet werden.

Bevorzugt wird eine Ansaugphase von 10 bis 12 Sekunden, und die Entleerzeit wird in der Größenordnung von 3 bis 5 Sekunden liegen: Um einen Überdruck beim Zykluswechsel zu vermeiden, ist eine pneumatisch geregelte Drosselung vorgesehen. Normalerweise genügt eine Sekunde für diesen Verzögerungsprozeß.

In gleicher Weise können dank den Zeitverzögerungen der Steuerung das Schließen des Vakuums zur Evakuierung der Luft und das Öffnen des Schmetterlingsventils 16ₐ zur Pulverentleerung angepaßt werden. Eine Verzögerung von maximal einer Sekunde dürfte hier ebenfalls genügen.

Der Entleerungsdruck -- Druckluft oder Stickstoff -- wird so geregelt, daß die gesamte eingesaugte Pulvermenge ohne unnötige Staubbildung beim Öffnen des Pumpraums 13 ausgestoßen wird (Idealdruck = 1,5 bis 2 bar).

Bei sehr klebrigen Produkten kann der Druck bis auf 2,5 bis 3 bar erhöht werden, um eine vollständige Entleerung und eine gründliche Filterreinigung zu erreichen.

Beispielsweise können sich folgende Betriebszustände für geöffnete Ventile einstellen:

**TABELLE 1**

| | | **Zuführung** | **Austrag** | **Druckgas** | **Vakuum** |
|---|---|---|---|---|---|
| Ventil | | 16 | 16a | 17 | 27 |
| Ansaugphase | 1 | -- | -- | -- | 1-2 sec* |
| | 2 | 3-20 sec* | -- | -- | 3-20 sec* |
| Zwischenphase | 3 | -- | -- | -- | 1-2 sec* |
| | 4 | -- | -- | 1-2 sec* | -- |
| Austragsphase | 5 | -- | 5-10 sec* | 5-10 sec* | -- |
| | 6 | -- | -- | -- | -- |

| | | | | | |
|---|---|---|---|---|---|
| * Öffnungsdauer in sec. | | | | | |

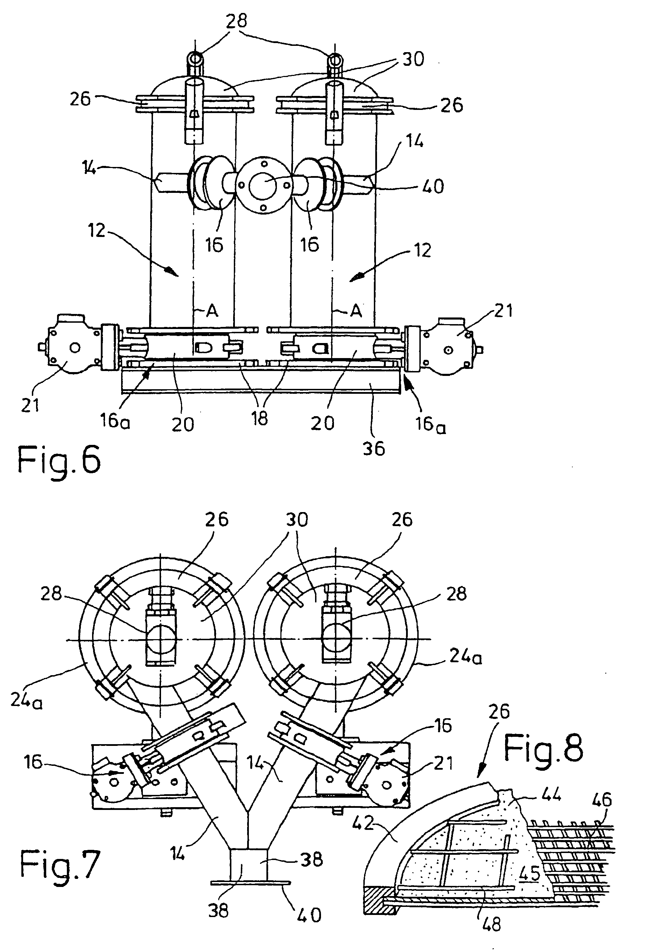

In Fig. 6 sind zwei der Vorrichtungen 10 parallel nebeneinander auf Trägern 36 angebracht; ihre Zuführleitungen 14 münden in ein gemeinsames Mündungsrohr 38 mit Anschlußflansch 40 für eine in der Zeichnung vernachlässigte weiterführende Förderleitung. Läßt man die beiden Vorrichtungen 10 in beschriebener Weise abwechselnd arbeiten, kann man von einem sequentiellen System auf ein kontinuierliches übergehen.

In einem Ringrahmen 42 des Filtereinsatzes 26 ist gemäß Fig. 8 ein Filter bzw eine Filtermembrane 44 mit vakuumseitig zugeordnetem flachem Gittemetz 46 geringer Maschenweite als Stützelement zugeordnet. Dieses kann mit einem nicht gezeigten Vibrationsantrieb verbunden sein und dessen Schwingungen auf die Filtermembrane 44 übertragen. Letztere wird von einem -- in Zeitintervallen gesteuerten -- Luftstrahl gereinigt; möglich sind auch mehrere solcher Luftstrahlen, die auf beide Oberflächen der Filtermembrane 44 gerichtet sind. Ein weitmaschiges Stabgitter 48 kann diese zudem an der jenem Gittemetz 46 abgekehrten Oberfläche 45 zusätzlich stützen.

Das Verhältnis der Länge a zum Durchmesser d des Behälters 12 liegt zwischen 2 bis 8; bei diesen konstruktiven Vorgaben ist bei einem Druck zwischen 1 bis 25 mbar -- vorzugsweise 5 bis 20 mbar -- auf der Ansaugseite und einem Uberdruck von 0,5 bis 5 bar -- vorzugsweise 1 bis 3 bar -- zum Ausstoßen des pulverförmigen Stoffes das problemlose Fördern von großen Mengen bis zu mehreren Tonnen pro Stunde möglich.

Um Entladungsfunken zu unterbinden, sind alle Systemteile wie Schläuche, Ventile od.dgl. leitend und müssen geerdet werden.

Wie Untersuchungen gezeigt haben, kann man bei dem beschriebenen Pumpensystem oder Förderer auch eine Dosierung einer guten Genauigkeit von < 10 % vornehmen.

Bevorzugte Abmessungen des Behälters 12 bei vorgegebenen Betriebsparametern sind der nachstehenden Tabelle zu entnehmen:

**TABELLE 2**

| **Durchmesser d** | **Länge a** | **Durchsatz** | | **Vakuumleistung** | **Saugdruck** |
|---|---|---|---|---|---|
| des Behälters (mm) | des Behälters (mm) | Pumpe (t/h) | Doppelpumpe (t/h) | (Nm3/h) | (mbar) |
| 300 | 850 | 5 | 8 | 300 | 5-20 |
| 200 | 800 | 3 | 5 | 200 | 5-20 |
| 150 | 750 | 2 | 3 | 160 | 5-20 |
| 100 | 650 | 1 | 1,7 | 100 | 5-20 |
| 50 | 400 | 0,3 | 0,5 | 40 | 5-20 |

Da das beschriebene Prinzip für das Laden von Pulvern in den Reaktor 11 unter Inertgas-Schutz erfolgt, genügt es, die Luft für die Filtersäuberung durch Inertgas zu ersetzen. Der interne Sauerstoffgehalt bleibt somit konstant -- oder nimmt während der Förderperiode sogar ab -- und der N2-Verbrauch gering.

Die Pulver können sehr schnell ausgewechselt werden, dies auch bei Beachtung der strengsten einschlägigen Normen. Die Ansaugkörper können aus verschiedenen Werkstoffen wie Edelstahl, Kunststoff, Hastelloy od.dgl. bestehen, um den wichtigsten Einschränkungen im chemischen Bereich standzuhalten.

Die Anlage kann auch mit Wägesystemen verbunden werden, um die Pulver direkt in die Reaktoren 11 genau dosieren zu können.

## Patentansprüche

1. Vorrichtung zum pneumatischen Fördern pulverförmiger Stoffe mit einem an eine Zuführleitung (14) sowie einen Austrag (22) für das Fördergut angeschlossenen Behälter (12), dessen Innenraum (13) durch zumindest ein plattenartiges Filterelement (44) von einem an eine Vakuumleitung (27ₐ) angeschlossenen Raum getrennt ist, wobei das plattenartige Filterelement (44) zwischen der Vakuumleitung (27ₐ) der Vakuumpumpe (27_{b}) zum Ansaugen des Fördergutes und dem Innenraum (13) vorgesehen ist und die Weite des Filterelements (44) etwa dem Durchmesser (d) des Behälters (12) entspricht sowie das Filterelement (44) von einer Abdeckung (30) überspannt ist, die mit ihm einen Kopfraum begrenzt,
**dadurch gekennzeichnet,**
**dass** zum Fördern eines Stoffes des spezifischen Gewichtes von 0,1 bis 15, 0 g/cm³ sowie mit einem Korngrößenbereich zwischen 0, 1 bis 300 µm als Fördergut das Verhältnis der Länge (a) des eine Pumpkammer (13) bildenden Behälters (12) zur zeitweiligen Aufnahme des Fördergutes zu seinem inneren Durchmesser (d) zwischen 2,0 und 8,0 liegt sowie an den an die zugeordnete Vakuumpumpe (27_{b}) angeschlossenen Raum (Domdeckel 30) eine Fördergasleitung (29ₐ) einer Fördergasquelle (29) anschließt, die mit einem Überdruck zum Austragen des Fördergutes zwischen 0,5 und 5,0 bar versehen ist, und dass sowohl in der Vakuumleitung (27ₐ) als auch in der Fördergasleitung (29ₐ) jeweils ein automatisches Sperrorgan (27, 17) angeordnet ist, wobei von einem der Abdeckungen (30) zugeordneten T-förmigen Anschlussrohr (28) Leitungen, nämlich zum einen die Vakuumleitung mit Sperrorgan (27) für die diesem vorgeordnete Vakuumpumpe (27_{b}) abgeht sowie anderseits die Fördergasleitung (29ₐ) für die Fördergasquelle (29), und dass der Behälter (12) sowohl an seiner Zuführleitung (14) als auch an seiner Austragsleitung (22) für das Fördergut jeweils mit einem automatischen Sperrorgan (16, 16ₐ) versehen ist.

2. Vorrichtung mit einem Träger zur Aufnahme von Filterelementen nach Anspruch 1, **gekennzeichnet durch** eine plattenartige Filtermembrane (44) als Filterelement, die in einem Rahmen (42) eines Filtereinsatzes (26) auswechselbar angebracht ist.

3. Vorrichtung nach Anspruch 1 oder 2, **dadurch gekennzeichnet, dass** der Behälterdurchmesser (d) zwischen 10 und 500 mm misst, inbesondere 50 bis 400 mm.

4. Vorrichtung nach Anspruch 1 oder 3, **dadurch gekennzeichnet, dass** der Behälterdurchmesser vom Filterelement (44) bis zu einer Austragsleitung (22) am Behälterboden (18) konstant ist.

5. Vorrichtung nach einem der Ansprüche 1 bis 4, **gekennzeichnet durch** eine Länge (a) des Behälters (12) zwischen 200 und 10.00 mm, insbesondere zwischen 400 und 900 mm.

6. Vorrichtung nach Anspruch 5, **dadurch gekennzeichnet, dass** das Verhältnis der Länge (a) des Behälters (12) zu dessen Durchmesser (d) zwischen 2,0 und 8,0, insbesondere zwischen 2,0 und 3,0, liegt.

7. Vorrichtung nach einem der Ansprüche 1 bis 6, **dadurch gekennzeichnet, dass** sie mit einem Druck zum Ansaugen des Fördergutes zwischen 1 und 25 mbar und/oder einem Überdruck zum Austragen des Fördergutes zwischen 0,5 und 5,0 bar versehen ist.

8. Vorrichtung nach Anspruch 7, **gekennzeichnet durch** einen saugseitigen Druck von 5,0 bis 20 mbar und/oder einem Überdruck von 1,0 bis 3,0 bar.

9. Vorrichtung nach einem der Ansprüche 1 bis 8, **gekennzeichnet durch** ein derart ausgelegtes Filterelement (44), dass an der der Vakuumpumpe (27_{b}) abgewandten Seite ein Differenzdruck zwischen 100 und 300 mbar besteht.

10. Vorrichtung nach einem der Ansprüche 1 bis 9, **gekennzeichnet durch** ein vakuumseitig dem Filter (44) zugeordnetes flaches Gitter (46) als Stützeinrichtung, das bevorzugt eine Maschenweite zwischen 5 und 50 mm, insbesondere zwischen 10 und 40 mm, aufweist.

11. Vorrichtung nach Anspruch 10, **dadurch gekennzeichnet, dass** das Gitter (46) an einen Vibrationsantrieb angeschlossen und als Vibrationsquelle für das Filterelement (44) ausgebildet ist.

12. Vorrichtung nach wenigstens einem der Ansprüche 1 bis 11, **dadurch gekennzeichnet, dass** das Filterelement (44) in einem Luftstrahl angeordnet und dieser in Zeitintervallen steuerbar ausgebildet ist.

13. Vorrichtung nach Anspruch 12, **dadurch gekennzeichnet, dass** dem Filterelement (44) auf beiden Seiten ein Luftstrahl zugeordnet ist.

14. Vorrichtung nach wenigstens einem der Ansprüche 1 bis 13, **dadurch gekennzeichnet, dass** das Filterelement (44) beidseits von einem Gitter (46, 48) überspannt ist, wobei gegebenenfalls eines der Gitter (48) mit dem Rahmen (42) fest verbunden ist.

15. Vorrichtung nach wenigstens einem der Ansprüche 1 bis 14, **dadurch gekennzeichnet, dass** die Vorrichtung (10) mit wenigstens einer weiteren Vorrichtung (10) zu einer Mehrfachanlage, insbesondere zu einer Tandemanlage, verbunden ist und/oder, dass die Vorrichtung/en (10) einem Reaktionsgefäß oder Reaktor (11) vorgeordnet ist/sind.

16. Verfahren zum pneumatischen Fördern pulverförmiger Stoffe unter Verwendung der Vorrichtung nach wenigstens einem der voraufgehenden Ansprüche, bei dem für Stoffe eines spezifischen Gewichtes von 0,1 bis 15,0 g/cm³ sowie mit einem Korngrößenbereich zwischen 0,1 und 300 µm als Fördergut mit geöffnetem Sperrorgan (27) der Vakuumleitung (27ₐ) sowie einem Unterdruck zwischen 1 und 25 mbar eine Ansaugphase bei geschlossener Austragsleitung (22) und geöffnetem Sperrorgan (16) der Zuführleitung (14) durchgeführt sowie letzere nach einer die Füllhöhe in der Pumpkammer (13) vorgebenden Zeitspanne geschlossen wird, wonach das Sperrorgan (16ₐ) der Austragsleitung (22) und das Sperrorgan (17) der Fördergasleitung (29ₐ) zu einem Entleerungszyklus geöffnet werden, während diesem das Fördergut durch einen Druckstrom aus Druckluft oder Stickstoff ausgestoßen sowie gleichzeitig durch diesen Druckstrom das Filterelement (44) gereinigt wird und zum Austragen des Fördergutes ein Überdruck zwischen 0,5 und 5,0 bar erzeugt wird.

17. Verfahren nach Anspruch 16, **gekennzeichnet durch** einen Unterdruck von 5,0 bis 20 mbar in der Ansaugphase.

18. Verfahren nach Anspruch 16 oder 17, **dadurch gekennzeichnet, dass** nach Beendigung der Ansaugphase einer bevorzugten Dauer von 10 bis 12 sec. die Vakuumleitung (27ₐ) während einer Zeitspanne bei noch geschlossener Austragsleitung (22) offen gehalten wird.

19. Verfahren nach einem der Ansprüche 16 bis 18, **dadurch gekennzeichnet, dass** vor dem Öffnen der Austragsleitung (22) der Behälter (12) unter Druck gesetzt und so gegen Gase aus einem nachgeordneten Reaktor (11) gesperrt wird.

20. Verfahren nach Anspruch 16 oder 19, **dadurch gekennzeichnet, dass** zum Austragen des Fördergutes ein Überdruck von 1,0 bis 3,0 bar erzeugt wird.

21. Verfahren nach einem der Ansprüche 16 bis 20, **dadurch gekennzeichnet, dass** an der dem Vakuum abgewandten Seite des Filterelements ein Differenzdruck zwischen 100 und 300 mbar erzeugt wird.

22. Verfahren nach einem der Ansprüche 16 bis 21, **dadurch gekennzeichnet, dass** zum pneumatischen Abfördern der pulverförmigen Stoffe gereinigte Druckluft oder ein inertes Gas oder ein reaktives Gas zugeführt wird, wobei bevorzugt als inertes Gas Stickstoff eingesetzt wird.

23. Verfahren nach einem der Ansprüche 16 bis 22, **dadurch gekennzeichnet, dass** das Filterelement (44) in Vibration versetzt wird und/oder, dass das Filterelement (44) in Zeitintervallen von einem Luftstrahl angeblasen wird, wobei gegebenenfalls das Filterelement (44) auf beiden Seiten von Luftstrahlen angeblasen wird.

24. Verfahren nach einem der Ansprüche 16 bis 23, **dadurch gekennzeichnet, dass** mehrere der Vorrichtungen (10) nach wenigstens einem der Ansprüche 1 bis 15 nebeneinander in gleichem Rhythmus gefahren werden.

25. Verfahren nach einem der Ansprüche 16 bis 23, **dadurch gekennzeichnet, dass** mehrere der Vorrichtungen (10) nach wenigstens einem der Ansprüche 1 bis 15 in wechselndem Rhythmus zueinander gefahren werden.

26. Verfahren nach einem der Ansprüche 16 bis 23, **dadurch gekennzeichnet, dass** wenigstens zwei Vorrichtungen (10) nach wenigstens einem der Ansprüche 1 bis 15 nebeneinander mit unterschiedlichen Rhythmen gefahren werden.

## Claims

1. Device for the pneumatic conveyance of pulverulent substances, comprising a container (12) connected to a supply line (14) and a discharge line (22) for the material to be conveyed, the inner space (13) of which is separated from a space connected to a vacuum line (27ₐ) by means of at least one plate-like filter element (44), the plate-like filter element (44) being provided between the vacuum line (27ₐ) of the vacuum pump (27_{b}) for drawing in the material to be conveyed and the inner space (13), the width of the filter element (44) corresponding approximately to the diameter (d) of the container (12) and the filter element (44) being covered by a cover (30) which delimits a headspace therewith, **characterised in that**, when the material to be conveyed is a substance having a specific gravity of 0.1 to 15.0 g/cm³ and a particle size range of between 0.1 and 300 µm, the ratio between the length (a) of the container (12) forming a pump chamber (13) for temporarily receiving the material to be conveyed and its inner diameter (d) is between 2.0 and 8.0 and a conveying-gas line (29ₐ) of a conveying-gas source (29) provided with an excess pressure of between 0.5 and 5.0 bar for discharging the material to be conveyed is connected to the space (dome cover 30) connected to the associated vacuum pump (27_{b}), that respective automatic shut-off members (27, 17) are arranged both in the vacuum line (27ₐ) and in the conveying-gas line (29ₐ), lines departing from a T-shaped connecting pipe (28) associated with the covers (30), namely, on the one hand, the vacuum line with a shut-off element (27) for the vacuum pump (27_{b}) arranged upstream thereof and, on the other hand, the conveying-gas line (29ₐ) for the conveying-gas source (29), and that the container (12) is provided both at its supply line (14) and at its discharge line (22) for the material to be conveyed with respective automatic shut-off members (16, 16ₐ).

2. Device comprising a support for receiving filter elements according to claim 1, **characterised by** a plate-like filter membrane (44) serving as the filter element and replaceably mounted in a frame (42) of a filter insert (26).

3. Device according to claim 1 or claim 2, **characterised in that** the container diameter (d) is between 10 and 500 mm, in particular 50 to 400 mm.

4. Device according to claim 1 or claim 3, **characterised in that** the container diameter is constant from the filter element (44) to a discharge line (22) on the container bottom (18).

5. Device according to one of claims 1 to 4, **characterised by** a length (a) of the container (12) of between 200 and 1000 mm, in particular between 400 and 900 mm.

6. Device according to claim 5, **characterised in that** the ratio between the length (a) of the container (12) and its diameter (d) is between 2.0 and 8.0, in particular between 2.0 and 3.0.

7. Device according to one of claims 1 to 6, **characterised in that** it is provided with a pressure of between 1 and 25 mbar for drawing in the material to be conveyed and/or an excess pressure of between 0.5 and 5.0 bar for discharging the material to be conveyed.

8. Device according to claim 7, **characterised by** a pressure of 5.0 to 20 mbar on the suction side and/or an excess pressure of 1.0 to 3.0 bar.

9. Device according to one of claims 1 to 8, **characterised by** a filter element (44) designed in such a manner that there is a differential pressure of between 100 and 300 mbar on the side remote from the vacuum pump (27_{b}).

10. Device according to one of claims 1 to 9, **characterised by** a plane lattice (46) serving as a supporting means associated with the filter (44) on the vacuum side and preferably having a mesh width of between 5 and 50 mm, in particular between 10 and 40 mm.

11. Device according to claim 10, **characterised in that** the lattice (46) is connected to a vibration drive and is designed as a vibration source for the filter element (44).

12. Device according to at least one of claims 1 to 11, **characterised in that** the filter element (44) is arranged in an air jet and the latter can be controlled at intervals.

13. Device according to claim 12, **characterised in that** an air jet is associated with the filter element (44) on both sides.

14. Device according to at least one of claims 1 to 13, **characterised in that** the filter element (44) is covered on both sides by a lattice (46, 48), one of the lattices (48) possibly being rigidly connected to the frame (42).

15. Device according to at least one of claims 1 to 14, **characterised in that** the device (10) is connected to at least one further device (10) to form a multiple installation, in particular a tandem installation, and/or that the device(s) (10) is/are arranged upstream of a reaction vessel or reactor (11).

16. Process for the pneumatic conveyance of pulverulent substances using the device according to at least one of the preceding claims, in which, when the material to be conveyed consists of substances having a specific gravity of 0.1 to 15.0 g/cm³ and a particle size range of between 0.1 and 300 µm, an intake phase is carried out with the shut-off member (27) of the vacuum line (27ₐ) open and a negative pressure of between 1 and 25 mbar and with the discharge line (22) closed and the shut-off member (16) of the supply line (14) open, and the latter is closed after an interval predetermining the level in the pump chamber (13), after which the shut-off member (16ₐ) of the discharge line (22) and the shut-off member (17) of the conveying-gas line (29ₐ) are opened to form an emptying cycle, during which the material to be conveyed is ejected by means of a pressure flow consisting of compressed air or nitrogen, the filter element (44) simultaneously being purified by this pressure flow and an excess pressure of between 0.5 and 5.0 bar being produced in order to discharge the material to be conveyed.

17. Process according to claim 16, **characterised by** a negative pressure of 5.0 to 20 mbar in the intake phase.

18. Process according to claim 16 or claim 17, **characterised in that**, at the end of the intake phase preferably lasting 10 to 12 sec, the vacuum line (27ₐ) is kept open for a time while the discharge line (22) is still closed.

19. Process according to one of claims 16 to 18, **characterised in that** the container (12) is pressurised before the discharge line (22) is opened so as to prevent the ingress of gases from a downstream reactor (11).

20. Process according to claim 16 or claim 19, **characterised in that** an excess pressure of 1.0 to 3.0 bar is produced in order to discharge the material to be conveyed.

21. Process according to one of claims 16 to 20, **characterised in that** a differential pressure of between 100 and 300 mbar is produced on the side of the filter element remote from the vacuum.

22. Process according to one of claims 16 to 21, **characterised in that** purified compressed air or an inert gas or a reactive gas is supplied for the pneumatic conveyance of the pulverulent substances, nitrogen preferably being used as the inert gas.

23. Process according to one of claims 16 to 22, **characterised in that** the filter element (44) is vibrated and/or that an air jet is blown over the filter element (44) at intervals, air jets possibly being blown over the filter element (44) on both sides.

24. Process according to one of claims 16 to 23, **characterised in that** a plurality of the devices (10) according to at least one of claims 1 to 15 are operated alongside one another in the same rhythm.

25. Process according to one of claims 16 to 23, **characterised in that** a plurality of the devices (10) according to at least one of claims 1 to 15 are operated in an alternating rhythm.

26. Process according to one of claims 16 to 23, **characterised in that** at least two devices (10) according to at least one of claims 1 to 15 are operated alongside one another in different rhythms.

## Revendications

1. Dispositif pour le transport pneumatique de matières pulvérulentes, comprenant un récipient (12) relié à une conduite d'alimentation (14) ainsi qu'à une évacuation (22) pour le produit à transporter, dont l'intérieur (13) est séparé par au moins un élément de filtre (44) en forme de plaque d'un espace relié à une conduite sous dépression (27ₐ), l'élément de filtre en forme de plaque (44) étant prévu entre la conduite sous dépression (27ₐ) de la pompe de la pompe à vide (27_{b}) pour l'aspiration du produit à transporter et l'intérieur (13) et la largeur de l'élément de filtre (44) correspondant approximativement au diamètre (d) du récipient (12), et l'élément de filtre (44) étant recouvert par un couvercle (30) qui avec lui délimite un espace de tête **caractérisé en ce que**,
- pour transporter une matière présentant un poids spécifique compris entre 0,1 et 15,0 g/cm³ ainsi que pour un produit à transporter dans une gamme de granulométrie entre 0,1 et 300 µm, le rapport de la longueur (a) du récipient (12) formant une chambre de pompage (13) pour la réception temporaire du produit à transporter à son diamètre intérieur (d) est compris entre 2,0 et 8,0, et **en ce que** sur l'espace (couvercle en dôme 30) raccordé sur la pompe à vide associée (27_{b}) se raccorde une conduite de gaz de transport (29ₐ) d'une source de gaz de transport (29), qui est dotée d'une surpression comprise entre 0,5 et 5,0 pour évacuer le produit à transporter et qu'un organe automatique d'obturation (27, 17) est disposé dans la conduite sous dépression (27ₐ), tout comme dans la conduite de gaz de transport (29ₐ), des conduites, à savoir d'une part la conduite sous dépression avec l'organe d'obturation (27) pour la pompe à vide (27_{b}) montée en amont de ce dernier, ainsi que d'autre part la conduite de gaz de transport (29ₐ) pour la source de gaz de transport (29) partant d'un tube de raccordement (28) en forme de T associé à l'un des couvercles (30), et **en ce que** aussi bien sur sa conduite d'alimentation (14) que sur sa conduite d'évacuation (22) pour le produit à transporter, le récipient (12) est respectivement muni d'un organe automatique d'obturation (16, 16ₐ).

2. Dispositif équipé d'un support pour recevoir des éléments de filtre selon la revendication 1, **caractérisé par** une membrane de filtre (44) en forme de plaque comme élément de filtre, laquelle est disposée de façon interchangeable dans un cadre (42) d'un insert de filtration (26).

3. Dispositif selon la revendication 1 ou 2, **caractérisé en ce que** le diamètre (d) du récipient (12) mesure entre 10 et 500 mm, notamment entre 50 et 400 mm.

4. Dispositif selon l'une des revendications 1 à 3, **caractérisé en ce que** le diamètre (d) du récipient (12) est constant, de l'élément de filtre (44) jusqu'à une conduite d'évacuation (22) sur le fond du récipient (18).

5. Dispositif selon l'une des revendications 1 à 4, **caractérisé par** une longueur (a) du récipient (12) comprise entre 200 et 1000 mm, notamment entre 400 et 900 mm.

6. Dispositif selon la revendication 5, **caractérisé en ce que** le rapport de la longueur (a) du récipient (12) à son diamètre (d) est compris entre 2,0 et 8,0, notamment entre 2,0 et 3,0.

7. Dispositif selon l'une des revendications 1 à 6, **caractérisé en ce qu'**il est soumis à une pression d'aspiration du produit à transporter comprise entre 1 et 25 mbar et/ou à une surpression d'évacuation du produit à transporter comprise entre 0,5 et 5,0 bar.

8. Dispositif selon la revendication 7, **caractérisé par** une pression côté aspiration comprise entre 5,0 et 20 mbar et/ou une surpression de 1,0 à 3,0 bar.

9. Dispositif selon l'une des revendications 1 à 8, **caractérisé par** un élément de filtre (44) réalisé et disposé de telle façon que, sur la face opposée à la pompe à vide (27_{b}), il existe une pression différentielle comprise entre 100 et 300 mbar.

10. Dispositif selon l'une des revendications 1 à 9, **caractérisé par** une grille plate (46) associée au filtre (44) côté dépression, servant d'organe de support qui présente de préférence une largeur de maille comprise entre 5 et 50 mm, notamment entre 10 et 40 mm.

11. Dispositif selon la revendication 10, **caractérisé en ce que** la grille (46) est reliée à un entraînement en vibration et est conçue en tant que source de vibration pour l'élément de filtre (44).

12. Dispositif selon au moins l'une des revendications 1 à 11, **caractérisé en ce que** l'élément de filtre (44) est disposé dans un jet d'air et **en ce que** ce dernier est conçu pour être contrôlable par intervalles de temps.

13. Dispositif selon la revendication 12, **caractérisé en ce qu'**un jet d'air est associé à l'élément de filtre (44) sur chacune des ses deux faces.

14. Dispositif selon au moins l'une des revendications 1 à 13, **caractérisé en ce que** l'élément de filtre (44) est couvert des deux côtés par une grille (46, 48) et **en ce que**, le cas échéant, l'une des grilles (48) est reliée rigidement au cadre (42).

15. Dispositif selon au moins l'une des revendications 1 à 14, **caractérisé en ce que** le dispositif (10) est relié à au moins un autre dispositif (10) pour constituer une installation multiple, en particulier une installation en tandem, et/ou **en ce que** le (les) dispositif(s) (10) est (sont) disposé(s) en amont d'un récipient de réaction ou réacteur (11).

16. Procédé de transport pneumatique de matières pulvérulentes en utilisant le dispositif selon au moins l'une des revendications précédentes, dans lequel pour des matières présentant un poids spécifique compris entre 0,1 et 15,0 g/cm³ , ainsi que pour un produit à transporter dans une gamme de granulométrie comprise entre 0,1 et 300 µm, on procède à une phase d'aspiration alors que l'organe d'obturation (27) de la conduite sous dépression (27ₐ) est ouvert, et avec une dépression comprise entre 1 et 25 mbar, alors que la conduite d'évacuation (22) est fermée et que l'organe d'obturation (16) de la conduite d'alimentation (14) est ouvert, cette dernière étant fermée après un intervalle de temps prédéfinissant la hauteur de remplissage dans la chambre de pompage (13), suite à quoi, on ouvre l'organe d'obturation (16ₐ) de la conduite d'évacuation (22) et l'organe d'obturation (17) de la conduite (29ₐ) de gaz de transport, pour réaliser un cycle de vidange, pendant lequel le produit à transporter est expulsé par un courant sous pression d'air comprimé ou d'azote et que simultanément, l'élément de filtre (44) est nettoyé par ce courant sous pression et que pour l'évacuation du produit à transporter, une surpression comprise entre 0,5 et 5,0 bar est générée.

17. Procédé selon la revendication 16, **caractérisé par** une dépression de 5,0 à 20 mbar au cours de la phase d'aspiration.

18. Procédé selon la revendication 16 ou 17, **caractérisé en ce que**, après l'achèvement de la phase d'aspiration, d'une durée préférée de 10 à 12 secondes, la conduite en dépression (27ₐ) est maintenue ouverte pendant un intervalle de temps, alors que la conduite d'évacuation (22) est encore fermée.

19. Procédé selon l'une des revendications 16 à 18, **caractérisé en ce que**, avant l'ouverture de la conduite d'évacuation (22), le récipient (12) est mis sous pression et est ainsi obturé à l'encontre des gaz venant d'un réacteur (11) monté en aval.

20. Procédé selon la revendication 16 ou 19, **caractérisé en ce que**, pour l'évacuation du produit à transporter, on génère une surpression comprise entre 1,0 et 3,0 bar.

21. Procédé selon l'une des revendications 16 à 20, **caractérisé en ce que**, sur la face de l'élément de filtre opposée à la dépression, on crée une pression différentielle comprise entre 100 et 300 mbar.

22. Procédé selon l'une des revendications 16 à 21, **caractérisé en ce que**, pour le transport pneumatique d'évacuation des matières pulvérulentes, on utilise de l'air comprimé épuré ou un gaz inerte ou un gaz réactif, et **en ce que**, de préférence, on introduit comme gaz inerte de l'azote.

23. Procédé selon l'une des revendications 16 à 22, **caractérisé en ce que** l'élément de filtre (44) est mis en vibration et/ou **en ce que** l'élément de filtre (44) est soumis par intervalles de temps au soufflage d'un courant d'air, et **en ce que**, le cas échéant, l'élément de filtre (44) est soumis sur ses deux faces au soufflage de courants d'air.

24. Procédé selon l'une des revendications 16 à 23, **caractérisé en ce que** plusieurs des dispositifs (10) selon au moins l'une des revendications 1 à 15 sont exploités les uns à côté des autres au même rythme.

25. Procédé selon l'une des revendications 16 à 23, **caractérisé en ce que** plusieurs des dispositifs (10) selon au moins l'une des revendications 1 à 15 sont exploités à des rythmes mutuels alternés.

26. Procédé selon l'une des revendications 16 à 23, **caractérisé en ce qu'**au moins deux dispositifs (10) selon au moins l'une des revendications 1 à 15 sont exploités les uns à côté des autres à des rythmes différents.
